# EUROPÄISCHE PATENTSCHRIFT

(11) **EP 0 476 351 B1**
(45) Veröffentlichungstag und Bekanntmachung des Hinweises auf die Patenterteilung: **19.01.1994**
(21) Anmeldenummer: 91114164.6
(22) Anmeldetag: 23.08.1991
(51) Int. Cl.: B60J 5/04

(54) **Fahrzeugtür**
Vehicle door
Porte pour véhicule

(30) Priorität: 30.08.1990 DE 4027449
(43) Veröffentlichungstag der Anmeldung: 25.03.1992
(73) Patentinhaber: SCHADE KG, D-58815 Plettenberg (DE); Adam Opel Aktiengesellschaft, 65428 Rüsselsheim (DE)
(72) Erfinder: Strunk, Harald, W-5970 Plettenberg (DE); Weise, Detlev, W-5760 Arnsberg 1 (DE); Lohmann, Horst, W-5768 Sundern (DE); Miklik, Dieter, W-6097 Trebur 2 (DE); Warner, Hermann, W-6097 Trebur 1 (DE); Zirm, Alois, W-6090 Rüsselsheim (DE)
(74) Vertreter: Wehnert, Werner, Dipl.-Ing. Patentanwälte Hauck, Graalfs, Wehnert, Döring, Siemons

(56) Entgegenhaltungen:
- EP-A- 0 222 990
- EP-A- 0 257 608

## Beschreibung

Die Erfindung bezieht sich auf eine Fahrzeugtür, bestehend im wesentlichen aus einem Fensterrahmen, einem türinnenseitig angeordneten Scharnierverstärkungsblech, einem Haltedreieck für einen Außenspiegel, einem Türfeststellerhalter, einem Schloßverstärkungsblech, einer Fensterschachtverstärkung, einem Türaußenblech und einem Türinnengerippe (siehe z.B. EP-A-0 222 990, Figur 7 und/oder EP-A-0 257 608, Fig.4).

Bei den bisher aus der Praxis bekannten Fahrzeugtüren für Automobile ist das Türgerippe aus einer verhältnismäßig großen Anzahl miteinander zu verbindender, meist zu verschweißender Einzelteile zusammengesetzt. Dementsprechend stellen sich die bekannten Türen bei ihrer Herstellung sehr kostenaufwendig. Besonders schwerwiegende Nachteile bei der Herstellung der bekannten Türen ergeben sich jedoch dadurch, daß die Ist-Maße einer zu fertigen Fahrzeugtür wegen der großen Anzahl von Einzelteilen in einem relativ weiten Toleranzfeld liegen, so daß die vorgegebene Maßgenauigkeit bei der Montage nicht immer erreicht werden kann. Darüberhinaus ist es bei den Montagearbeiten meist sehr schwierig, die einander benachbarten Einzelteile eines Türgerippes möglichst lagegenau und konturengerecht miteinander zu verbinden. Dadurch läßt es sich oftmals nicht vermeiden, daß zwischen den benachbarten Einzelteilen ungeschützte und besonders korrosionsanfällige Zwischenräume entstehen, so daß die Stabilität der Tür als Ganzes und die Lebensdauer durch Korrosionsbefall beeinträchtigt wird.

Der Erfindung liegt deshalb die Aufgabe zugrunde, eine Fahrzeugtür der eingangs genannten Art so zu gestalten, daß der Aufbau des Türgerippes und die Montage der Einzelteile bei einer möglichst hohen Steifigkeit der Türkonstruktion vereinfacht wird und die Tür besser als bisher gegen Korrosionsanfälligkeit geschützt ist.

Dies wird nach der Erfindung dadurch erreicht, daß das Scharnierverstärkungsblech und das Haltedreieck für den Außenspiegel als ein einstückiges, aus Metall bestehendes Formteil ausgebildet sind, welches im Einbauzustand den vorderen Bereich des Türinnengerippes bildet.

Da nach dem erfindungsgemäßen Lösungsvorschlag das Scharnierverstärkungsblech und das Haltedreieck für den Außenspiegel einstückig ausgebildet sind und somit ein zusammengesetztes Teil des Türinnengerippes bilden, wird die Anzahl der verschiedenen zusammenzusetzenden Einzelteile wirksam verringert. Dadurch, daß das einstückige Formteil als Preß- und Walzteil aus Metall in einem Arbeitsgang gefertigt werden kann, wird zudem eine erhebliche Einsparung an Werkzeugkosten erzielt, da nunmehr für das Scharnierverstärkungsblech und das Haltedreieck nur noch ein einziges Werkzeug, statt bisher zwei Werkzeuge, benötigt werden. Außerdem entfallen die beim Zusammenfügen der einzelnen Bauteile bisher unvermeidbaren Toleranzungenauigkeiten. Die Zahl der Einzelteile wird noch zusätzlich dadurch verringert, wenn nach einem weiteren Vorschlag der Erfindung das Schloßverstärkungsblech den hinteren Bereich des Türinnengerippes bildet. Bei einer Automobiltür mit den genannten Lösungsmerkmalen nach der Erfindung wird die Bildung von nachteiligen Doppellagen zwischen benachbarten Einzelteilen vermieden, was sich positiv auf die Gesamtstabilität des Türgerippes auswirkt. Die durch die einstückige Zusammenfassung verschiedener Einzelteile zwangsläufig fortfallenden ungeschützten Zwischenräume führen zu einem wesentlich verbesserten Korrosionsschutz. Darüberhinaus wurde durch den Vorschlag nach der Erfindung der fertigungstechnische Aufwand gegenüber den bisher bekannten Automobiltüren wesentlich verringert.

Weitere Merkmale und Vorteile ergeben sich aus den Patentansprüchen 3 bis 10.

Die Erfindung ist nachstehend anhand einer Zeichnung näher erläutert.

In der Zeichnung zeigen:
- Figur 1: - den Fensterrahmen einer Fahrzeugtür,
- Figur 2: - das aus dem Scharnierverstärkungsblech und dem Haltedreieck für den Außenspiegel gebildete einstückige Formteil nach der Erfindung,
- Figur 3: - das einstückige Schloßverstärkungsblech,
- Figur 4: - die stabförmig ausgebildete Fensterschachtverstärkung,
- Figur 5: - den Halter für das Scheibenführungsprofil und
- Figur 6: - das aus den in den Figuren 1 bis 5 dargestellten Einzelteilen gefertigte Türgerippe.

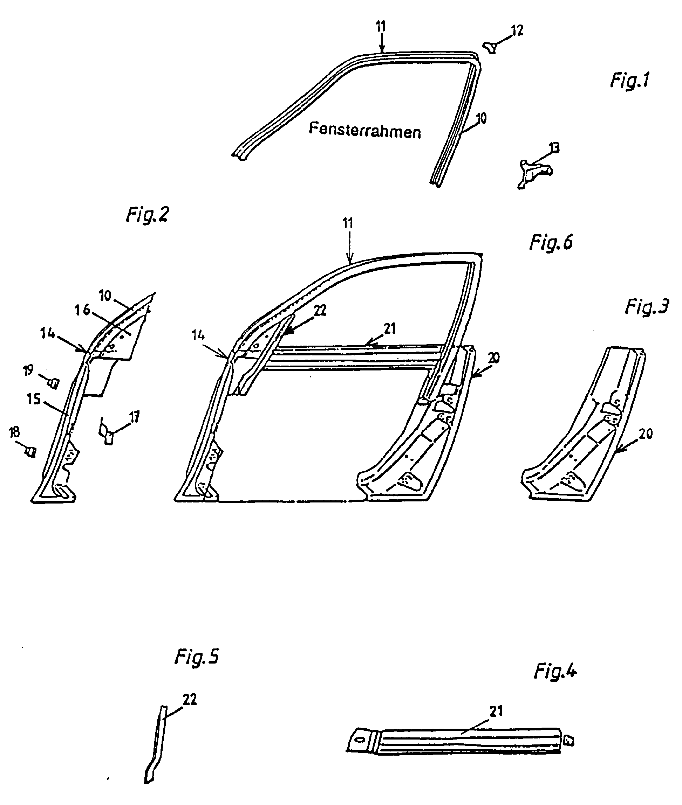

Das Profil (10) des Türfensterrahmens (11) ist ein gerolltes Profil aus Metall. Am Türfensterrahmen (11) sind in bekannter Weise eine Formecke (12) und ein einstellbarer Halter (13) befestigt. Das in Figur 2 dargestellte Formteil (14) nach der Erfindung umfaßt ein Scharnierverstärkungsblech (15), ein Haltedreieck (16) für einen Außenspiegel, einen Halter (17) für einen Türfeststeller, sowie zwei Scharniere (18,19) zum Anlenken der Fahrzeugtür an den zugeordneten Karosserieausschnitt eines Fahrzeugs. Das Scharnierverstärkungsblech (15) weist einen Bördelflansch für die Außenschale auf, damit diese in einfacher Weise am Scharnierverstärkungsblech festgelegt werden kann. Die Einzelteile 15 - 19 sind am Formteil (14) angeschweißt, welches seinerseits mit dem Türfensterrahmen (11) verschweißt ist. Der Übergangsbereich vom Scharnierverstärkungsblech (15) zum Türfensterrahmen (11) ist flächenbündig verputzt, um einen Versatz in der zugeordneten Dichtfläche des Rahmens zu vermeiden.

Figur 3 zeigt das Schloßverstärkungsblech (20). Dieses wird, wie aus Figur 6 ersichtlich, für den Fensterscheibenschacht an den Türfensterrahmen (11) angeschweißt und ebenfalls flächig verputzt.

Aus Figur 6 ergibt sich, daß das Formteil (14) den vorderen Bereich des Türinnengerippes und das Schloßverstärkungsteil (20) den hinteren Bereich des Türinnengerippes bildet, jeweils bezogen auf den Einbauzustand, das heißt, das Formteil (14) ist der Türschwenkachse zugeordnet, während das Schloßverstärkungsteil (20) dem feststehenden Türholm mit den Rastbolzen für das Schloß benachbart ist. Der Halter (13) für den Türfensterrahmen (11) kann fest mit dem Schloßverstärkungsblech (20) von innen her verschweißt werden. Diese feste Verbindung wird im Zuge der Fertigung des Türgerippes hergestellt. Es ist jedoch auch möglich, den Halter (13) für den Türfensterrahmen (11) mittels einstellbarer nicht dargestellter Laschen am Schloßverstärkungsteil (20) zu befestigen. Dies erfolgt dann im Automobilwerk im Zuge der Vormontage.

Im gleicher Weise wird der in den Figuren 5 und 6 dargestellte Halter (22) für das Scheibenführungsprofil befestigt. Aus Figur 6 wird deutlich, daß sich der Halter (22) vom Haltedreieck (16) für den Außenspiegel aus über eine Dichtung hinaus nach unten erstreckt.

In der Figur 4 ist die Fensterschachtverstärkung (21) gezeigt, die in nicht dargestellter Weise die oberen Bereiche des Formteiles (14) und des Schloßverstärkungsteils (20) des Türgerippes verbindet und zweckmäßig verschweißt ist. Das Formteil (14) und das Schloßverstärkungsblech (20) sind in ihren unteren Bereichen zweckmäßig scharfkantig eingedrückt, um den Übergang von den Seitenblechen zum Türinnengerippe möglichst flächenbündig zu gestalten. Die Übergangsbereiche vom Türinnenblech zum Schloßverstärkungsblech (20) und zum Scharnierverstärkungsblech (15) können ebenfalls eingedrückt sein, um das flächenbündige Aufkleben einer Dichtfolie zu ermöglichen. Das weitere Montageteile aufnehmende Türinnenblech wird später im Automobilwerk in das Türgerippe eingeschweißt, während das Türaußenblech auf die so hergestellte Baueinheit aufgebördelt und gegebenenfalls zusätzlich punktverschweißt wird.

## Patentansprüche

1. Fahrzeugtür, bestehend aus einem Fensterrahmen (11), einem türinnenseitig angeordneten Scharnierverstärkungsblech (15), einem Haltedreieck (16) für einen Außenspiegel, einem Türfeststellerhalter (17), einem Schloßverstärkungsblech (20), einer Fensterschachtverstärkung (21), einem Türaußenblech und einem Türinnengerippe, dadurch gekennzeichnet, daß das Scharnierverstärkungsblech (15) und das Haltedreieck (16) für den Außenspiegel als ein einstückiges, aus Metall bestehendes Formteil (14) ausgebildet sind, welches im Einbauzustand den vorderen Bereich des Türinnengerippes bildet.

2. Fahrzeugtür nach Anspruch 1, dadurch gekennzeichnet, daß das Schloßverstärkungsblech (20) im Einbauzustand den hinteren Bereich des Türinnengerippes bildet.

3. Fahrzeugtür nach den Ansprüchen 1 oder 2, dadurch gekennzeichnet, daß am Formteil (14) außerdem der Türfeststellerhalter (17) sowie Scharniere (18) befestigt sind.

4. Fahrzeugtür nach den Ansprüchen 1 bis 3, dadurch gekennzeichnet, daß zur Vermeidung eines Versatzes der Dichtflächen der Übergangsbereich vom Scharnierverstärkungsblech (15) zum Türfensterrahmen (11) flächenbündig verputzt ist.

5. Fahrzeugtür nach Anspruch 2, dadurch gekennzeichnet, daß ein Halter (13) für den Türfensterrahmen (11), durch Schweißen von der Türinnenseite her, am Schloßverstärkungsblech (20) befestigt ist.

6. Fahrzeugtür nach Anspruch 2, dadurch gekennzeichnet, daß der Halter (13) mittels einstellbarer Laschen am Schloßverstärkungsblech (20) befestigt ist.

7. Fahrzeugtür nach einem der Ansprüche 1 bis 6, dadurch gekennzeichnet, daß am Formteil (14) ein Halter (22) für ein Scheibenführungsprofil durch Schweißen oder mittels einstellbarer Laschen befestigt ist.

8. Fahrzeugtür nach Anspruch 1 und 2, dadurch gekennzeichnet, daß die oberen Bereiche des Scharnierverstärkungsbleches (15) und des Schloßverstärkungsbleches (20) durch eine profilierte, stabförmige Fensterschachtverstärkung (21) miteinander verbunden, vorzugsweise verschweißt, sind.

9. Fahrzeugtür nach einem der Ansprüche 1 bis 8, dadurch gekennzeichnet, daß das Formteil (14) und das Schloßverstärkungsblech (20) an ihrer Unterseite eine scharfkantige Einziehung aufweisen, in die das Türseitenblech flächenbündig eingreift.

10. Fahrzeugtür nach einem der Ansprüche 1 bis 9, dadurch gekennzeichnet, daß die Übergangsbereiche vom Türinnenblech zum Schloßverstärkungsblech (20) und zum Scharnierverstärkungsblech (15) zum flächenbündigen Auskleben einer Dichtfläche oder dergleichen eine umlaufende Einziehung ausweisen.

## Claims

1. A vehicle door comprising a window frame (11), a door hinge stiffening metal sheet (15) disposed at the door inside, a triangular holding member (16) for an outside mirror, a door latch holder (17), a door lock stiffening metal sheet (20), a window channel enforcement member (21), a door outside metal sheet and a door inside skelet, characterized in that said door hinge stiffening metal sheet (15) and said triangular holding member (16) for the outside mirror are comprised of an integrally formed part (14) of metal, which when assembled forms the front portion of the door inside skelet.

2. The vehicle door of claim 1, characterized in that said door lock stiffening metal sheet (20) when assembled forms the rear portion of said door inside skelet.

3. The vehicle door of claim 1 or claim 2, characterized in that said door latch holder (17) and hinges (18,19) are also fixed to said formed part (14).

4. The vehicle door of claims 1 to 3, characterized in that the transition area from the door hinge stiffening metal sheet (15) to the door window frame (11) is made flush by abrasion so as to avoid any offset of the sealing surfaces.

5. The vehicle door of claim 2, characterized in that a holder (13) for the door window frame (11) is fixed to said door lock metal sheet (20) by welding from the door inside.

6. The vehicle door of claim 5, characterized in that the holder (13) is fixed to the door lock stiffening metal sheet (20) by adjustable brackets.

7. The vehicle door of any of claims 1 to 6, characterized in that a holder (22) for a window paneel guiding profile is fixed to said formed part (14) by welding or by means of adjustable brackets.

8. The vehicle door of claims 1 and 2, characterized in that the upper portions of the door hinge stiffening metal sheet (15) and the door lock stiffening metal sheet (20) are connected, preferably welded, to each other by a rod-shaped profiled window channel enforcement member (21).

9. The vehicle door of any of claims 1 to 8, characterized in that said formed part (14) and said door lock stiffening metal sheet (20) have bottom surfaces provided with sharp-edged recesses for receiving the door inside metal sheet so as to be flush therewith.

10. The vehicle door of any of claims 1 to 9, characterized in that the transition areas from the door inside metal sheet to the door lock stiffening metal sheet (20) and to the door hinge stiffening metal sheet (15) include a circumferential recess so as to allow for glueing a sealing surface or the like thereinto in a flush manner.

## Revendications

1. Porte de véhicule, constituée d'un cadre de vitre (11), d'une tôle de renforcement de charnière (15) disposée du côté intérieur de la porte, d'un support triangulaire (16) pour rétroviseur extérieur, d'un support d'arrêt de porte (17), d'une tôle de renforcement de serrure (20), d'un renforcement de puits de vitre (21), d'une tôle extérieure de porte et d'une ossature intérieure de porte, **caractérisée** en ce que la tôle de renforcement de charnière (15) et le support triangulaire (16) pour rétroviseur extérieur sont réalisés sous la forme d'une pièce usinée (14) d'un seul tenant, réalisée en métal, qui constitue à l'état monté la région avant de l'ossature intérieure de porte.

2. Porte de véhicule selon la revendication 1, **caractérisée** en ce que la tôle de renforcement de serrure (20) constitue, à l'état monté, la région arrière de l'ossature intérieure de porte.

3. Porte de véhicule selon la revendication 1 ou 2, **caractérisée** en ce que le support d'arrêt de porte (17) ainsi que des charnières (18,19) sont en outre fixée sur la pièce usinée (14).

4. Porte de véhicule selon l'une quelconque des revendications 1 à 3, **caractérisée** en ce qu'afin d'éviter un décalage des faces d'étanchéité, la région de transition entre la tôle de renforcement de charnière (15) et le cadre de vitre de porte (11) est enduite en affleurement.

5. Porte de véhicule selon la revendication 2, **caractérisée** en ce qu'un support (13) pour le cadre de vitre de porte (11) est fixé par soudage, par l'intérieur de la porte, sur la tôle de renforcement de serrure (20).

6. Porte de véhicule selon la revendication 2, **caractérisée** en ce que le support (13) est fixé sur la tôle de renforcement de serrure (20) au moyen de pattes réglables.

7. Porte de véhicule selon l'une quelconque des revendications 1 à 6, **caractérisée** en ce qu'un support (22) pour un profilé de guidage de vitre est fixé par soudage ou au moyen de pattes réglables sur la pièce usinée (14).

8. Porte de véhicule selon la revendication 1 ou 2, **caractérisée** en ce que les régions supérieures de la tôle de renforcement de charnière (15) et de la tôle de renforcement de serrure (20) sont mutuellement assemblées, de préférence soudées, par un renforcement profilé de puits de vitre (21), en forme de barre.

9. Porte de véhicule selon l'une quelconque des revendications 1 à 8, **caractérisée** en ce que la pièce usinée (14) et la tôle de renforcement de serrure (20) présentent, sur leur face inférieure, un renfoncement à bords anguleux dans lequel s'engage en affleurement la tôle latérale de porte.

10. Porte de véhicule selon l'une quelconque des revendications 1 à 9, **caractérisée** en ce que les régions de transition de la tôle intérieure de porte avec la tôle de renforcement de serrure (20) et avec la tôle de renforcement de charnière (15) présentent un renfoncement qui en fait le tour, pour le collage en affleurement d'une surface d'étanchéité ou similaire.
